(19) Europäisches Patentamt
European Patent Office
Office européen des brevets

(11) **EP 2 469 465 A1**

(12) **EUROPEAN PATENT APPLICATION**

(43) Date of publication:
27.06.2012 Bulletin 2012/26

(51) Int Cl.:
*G06Q 50/06* (2012.01)   *G06Q 10/06* (2012.01)

(21) Application number: **11009930.6**

(22) Date of filing: **16.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2010 US 971716**

(71) Applicant: **SAP AG**
**69190 Walldorf (DE)**

(72) Inventors:
• **Ameling, Michael**
**69190 Walldorf**
**(DE)**

• **Majumdar, Anirban**
**69190 Walldorf**
**(DE)**
• **Salmen, Angelika**
**69190 Walldorf**
**(DE)**

(74) Representative: **Müller-Boré & Partner**
**Patentanwälte**
**Grafinger Straße 2**
**81671 München (DE)**

(54) **Mapping and aggregation of energy consumption for production**

(57)    The present description refers to a computer implemented method, computer program product, and computer system for receiving a production route associated with the production of one or more products using one or more machines, each of the machines to perform one or more production steps on one or more of the products, receiving a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products, assigning one or more of the energy consumption values to one of the products based on the tuples and the production routes, and aggregating the energy consumption values assigned to one or more of the products.

FIG. 1

**Description**

**TECHNICAL FIELD**

This description is directed generally to processing of energy consumption values related to production, and in particular, to a computer-implemented method, apparatus, and computer program product for mapping and aggregation of energy consumption for production.

**BACKGROUND**

Various programs and legislation around the world have been implemented to reduce energy consumption and/or green house gas emissions. For example, Energy Star is a government-backed labeling program that helps people and organizations save money and reduce greenhouse gas emissions by identifying office equipment, home appliances and electronics that have superior energy efficiency. Energy Star originated in 1992 as a joint program of the U.S. Environmental Protection Agency (EPAM) and the U.S. Department of Energy (DoE). In 2007, the European Union adapted Energy Star, including related standards, for all of its members. Other countries have also adopted the Energy Star program or similar programs.

A variety of other programs, regulations and laws have been implemented with the aim to improve energy efficiency and/or reduce emissions of green house gasses. For example, the Energy savings Regulation (EnEV) forms part of the German building laws, and entered into force in 2002. The law lays the architectural standard requirements for efficient operating energy consumption of buildings or construction projects.

The Kyoto Protocol is a recommendation for the design of the United Nations Framework Convention on climate change. It was adopted in 1997 and has been in force since 2005. All EU Member states have agreed to the protocol, by which they are obligated to reduce the emission of the six most relevant greenhouse gases between 2008 and 2012 by 5.2%.

The renewable energies Act (EEG) designates priority of renewable energy and supports the development of technologies for the production of electricity from renewable energy sources. Overarching objectives are the climate and environmental protection. The law entered into force in 2000 for the first time and was renewed in 2009. The European Union (EU) has also set the 20-20-20 objectives. The goals include reducing greenhouse gas emissions by 20%, improving energy efficiency by 20% and increasing the share of renewable resources to 20% by the year 2020. Also, various tax laws have been enacted related to energy consumption. For example, the current German tax law for power supply (SromStG) determines the taxation levels for electricity consumption.

Energy meters and related energy measurement techniques are available from various manufacturers that may report energy consumption to users or utilities. However, existing energy meters and related techniques have been primarily directed to energy measurement for equipment, appliances, electronics and systems during their use or operation.

**SUMMARY**

In one general aspect, a computer program product is provided. The computer program product is tangibly embodied on a computer-readable storage medium and includes executable code that, when executed, is configured to cause at least one data processing apparatus to: receive a production route associated with the production of one or more products using one or more machines, each of the machines to perform one or more production steps on one or more of the products and receive a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products. The code is further configured to cause the data processing apparatus to assign one or more of the energy consumption values to one of the products based on the tuples and the production routes, and aggregate the energy consumption values assigned to one or more of the products.

In another general aspect, a computer implemented method is provided that includes receiving a production route associated with the production of one or more products using one or more machines, each of the machines to perform one or more production steps on one or more of the products, and receiving a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products. The method also includes assigning one or more of the energy consumption values to one of the products based on the tuples and the production routes, and aggregating the energy consumption values assigned to one or more of the products.

In another general aspect, an apparatus includes a production route receiving logic configured to receive a production route associated with the production of one or more products using one or more machines, each of the machines to perform one or more production steps on one or more of the products. The apparatus also includes a tuple receiving logic configured to receive a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products. The apparatus further includes a tuple assignment controller configured to assign one or more of the energy consumption values to one of the products based on the tuples and the production routes, and an aggregating logic configured to aggregate the energy consumption values assigned to one or more of the products.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described herein.

In addition, the subject matter described herein may also be implemented as a system including a processor and a memory coupled to the processor. The memory may encode one or more programs that cause the processor to perform one or more of the method acts described in this specification.

The details of one or more implementations are set forth in the accompanying drawings and the description below. Other features will be apparent from the description and drawings, and from the claims.

## BRIEF DESCRIPTION OF THE DRAWINGS

FIG. 1 is a block diagram illustrating an exemplary system for collecting and mapping energy consumption values for the production of one or more products.

FIG. 2A is a block diagram illustrating an example implementation of computer 150.

FIG 2B is a flow chart illustrating an operation of a computer to receive tuples (including energy consumption values) from machines and map the tuples to one or more products according to an example implementation.

FIG. 3 is an event-timed diagram that illustrates a production route and timing of two different products.

FIG. 4 is a diagram illustrating a mapping of tuples corresponding to the event-timed diagram of FIG. 3.

FIG. 5 is an event-timed diagram that illustrates a production route and timing of two different products for an example serial and non-sequential production.

FIG. 6 is an event-timed diagram that illustrates a production route and timing of two different products for another example serial and non-sequential production.

FIG. 7 is a table of example tuples associated with the diagram shown in FIG. 6.

## DETAILED DESCRIPTION

In the following, a detailed description of examples will be given with reference to the drawings. It should be understood that various modifications to the examples may be made. In particular, elements of one example may be combined and used in other examples to form new examples.

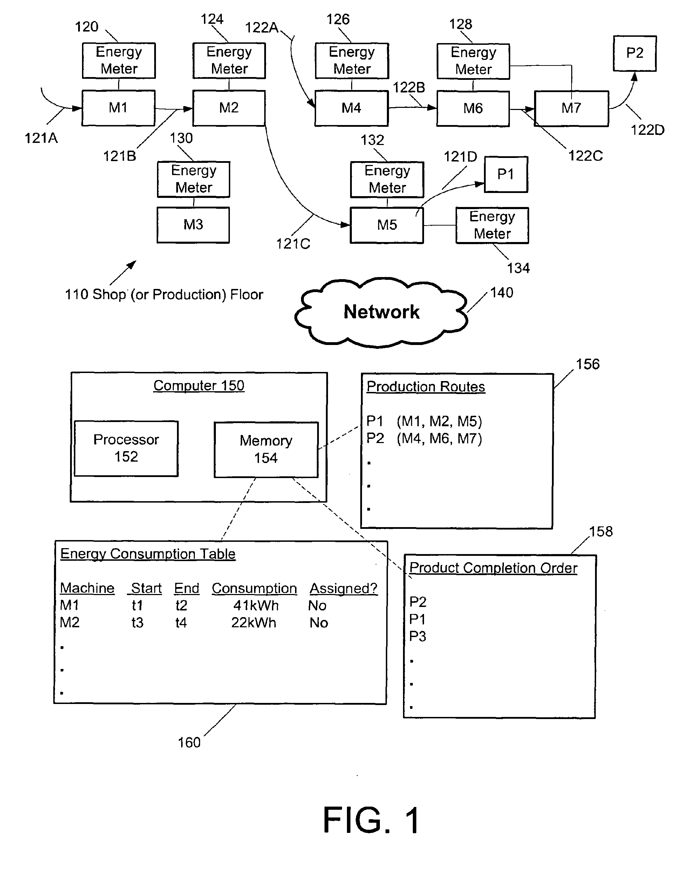

FIG. 1 is a block diagram illustrating an exemplary system for collecting and mapping energy consumption values for the production of one or more products. In this way, various energy consumption data may be collected for production processes, and then may be used to improve energy efficiency for such production or manufacturing. As an additional or alternative example application, the energy consumption data for production processes or for manufacture of specific products may be reported to government agencies or consumers.

A shop (or production) floor 110 may include a number of machines that may be used in one or more production processes to produce one or more products. The machines may include, for example, machines M1, M2, M3, M4, M5, M6 and M7, although any number and any arrangement of machines may be used. A machine may include any device or apparatus that may perform a production step in the production of a product. A machine may, for example, change the state of an object, or otherwise change some aspect of an object (or of the product) to produce or manufacture the product. A wide variety of different types of machines may be used for the production or manufacture of products in a wide variety of industries or technologies, such as, for example, in the production of electronics, automobiles, consumer goods, packaging products, plastics, etc. Only a few illustrative industries or technologies are listed, but many others may be used.

Production routes for two example products, P1 and P2, are shown in FIG. 1. A production route may identify a sequence or order of machines that are used to produce a product. Therefore, the production route may identify the route of a product as it travels from machine to machine during production. According to one example implementation, each machine listed or identified in the product route may perform a production step, and in the order listed in the production route. The overall processing (or the production steps) performed on a production route may be referred to as the production process.

As shown in FIG. 1, the example production route for product P1 is shown by lines 121 (121 A, 121 B, 121 C and 121 D), whereas the example production route for product P2 is shown by lines 122 (122A, 122B, 122C and 122D). For example, with respect to the production route for product P1, one or more raw materials may be received via line 121A at machine M1 where a first production step is performed. The partially produced product (for example) is then transferred via line 121 B to machine M2 where a second production step is performed. The partially produced product may then be transferred from machine M2 to machine M5 via line 121 C where a final production step may be performed. The completed product P1 may then be output as shown by line 121 D. Similarly, with respect to the production route for P2, one or more raw materials (or an initial, unfinished product) may be received by machine M4 via line 122A, for example, where a first production step is performed. The partially completed product may be transferred via line 122B from machine M4 to machine M6 where a second production step may be performed. The partially completed product may be transferred via line 122C from machine M6 to machine M7 where a final production step may be performed. The completed (or produced) product P2 may be output via line 122D.

Many different types of machines may be used to produce different kinds of products. In a simple illustrative example, different types of wooden blocks may be produced (or manufactured) on shop floor 110 using different types of machines. For example, a first type of wooden block (e.g., product P1) may be produced by a production route for P1 that includes an order or sequence of three machines: [M1, M2, M5], where machine M1 may be a saw to cut the block to a specific size and shape, machine M2 may be a sander (or sanding machine) to sand the block, and machine M5 may be a painting machine to paint the block a specific color. Similarly, a second type of wooden block (e.g., product P2) may be produced or manufactured using a sequence or order of machines identified by the production route for P2: [M4, M6, M7]. In this illustrative example, machine M4 may be a drill to drill one or more holes in a block, machine M6 may be a sander to sand portions of the drilled block received from machine M4, and machine M7 may be a laminating machine that may laminate (or wrap) the block output by machine M4 in plastic.

Although different machines are used for the production routes of (or processes for) P1 and P2 in this example, two different processes may use any combination of machines and may even use one or more of the same machines for production. For example, product P2 may use sander or sanding machine M2 instead of sanding machine M6, such that both P1 and P2 use sanding machine M2. This is merely one illustrative example of a use of machines to produce products, and the disclosure is not limited thereto. Many other types and arrangements of machines may be used to produce or manufacture a wide variety of different products.

Each machine may consume energy (e.g., electricity) during operation to perform a production step. It may be desirable to collect data related to the energy consumed to produce each product. In an example embodiment, one or more energy meters may be provided to measure the energy (e.g., electricity) consumed by a machine or machines for one or more production steps to produce or manufacture one or more products. Each energy meter may identify and store data associated with a production step, such as: a machine ID to identify the machine that consumed the energy to perform a production step, a time stamp information (e.g., start time stamp and end time stamp) to identify a period of time during which the production step was performed by the identified machine, and the amount of energy consumed by the machine to perform the production step during the identified period of time. Other information may be stored as well.

In the example shown in FIG. 1, an energy meter 120 may be connected to machine M1 to measure energy consumed by machine M1. In some cases, an energy meter may be provided for each machine. Energy meters 124, 126, 130 and 132 are connected to machines M2, M4, M3 and M5, respectively, to measure energy consumption and collect data with respect to the associated machine. However, in other cases or in another example implementation, one energy meter may be provided to measure energy consumed by a plurality of (or multiple) machines. For example, an energy meter 128 may be provided to measure energy consumed by machines M6 and/or M7, e.g., when machines M6 and/or M7 perform a production step(s) for one or more processes or production routes. In yet another case or example implementation, multiple energy meters may be provided to measure energy consumed by one machine. For example, energy meters 132 and 134 may be provided to measure energy consumed by machine M5, e.g., for production routes X and Y, respectively, or for different products.

A computer 150 may communicate with each of the energy meters and machines via a network 140. Computer 150 may include, for example, a processor 152, a memory 154 and a network interface (not shown), input/output devices (not shown). Computer 150 may provide overall control of the production of the various products. In one example embodiment, each machine may also include a memory and a processor or controller for providing overall control of the machine operation. One processor or controller may one or more machines. Network 140 may be any type of network such as a wired network (e.g., Ethernet or Local Area Network or LAN), or a wireless network (such as a Bluetooth wireless network or a WLAN or wireless LAN network as examples).

In an example implementation, each of the energy meters may include a processor, memory, and a network interface (not shown) for communicating with computer 150 or with other computers or computing devices over a network 140. The processor may be a programmable microprocessor, logic or hardware (such as a programmable gate array or PGA), or other logic or circuitry.

Computer 150 may receive and store in memory 154 one or more production routes 156. As examples, computer 150 may store in memory 154 the productions routes for product P1 as route [M1, M2, M5], and the production route for product P2 as [M4, M6, M7]. These are merely examples, and many other routes may be included. Computer 150 may also send or distribute one or more production routes to the machines and/or to the energy meters. Computer 150 may also receive and store in memory 154 a product completion order 158 which may identify an order in which products are to be completed. In one example, the product completion order 158 may be P1, P2, P3, ... In some cases (although not necessarily in the example shown in FIG 1), the production completion order may be used by computer 150 in mapping or assigning tuples (including energy consumption values) to machines. In some examples, one or more machines may process products in product completion order. In such case, the product completion order may also be referred to as a processing order.

Each energy meter may measure the energy (e.g., electricity or other type of energy) consumed by a machine to perform one or more production step(s) to produce one or more products. Each of the energy meters may send one or more messages via network 140 to a computer 150 to provide or report tuples (or data sets) for each (or one or more) production steps. Thus, each energy meter may collect and then report to computer 150, via one or more messages, tuples or data sets associated with one or more production steps. In one example implementation, each tuple or data set reported to computer 150 may include a machine ID to identify the machine that consumed the energy to perform a production step, a time stamp information (e.g., start time stamp and end time stamp) to identify a period of time during which the production step was performed by the identified machine, and the amount of energy consumed by the machine to perform the production step during the identified period of time. In one example implementation, the machine ID may identify a machine (either a machine type or a specific machine). In another example implementation, the machine ID may be associated with (or identify) an energy meter (e.g., in the case where one meter monitors one machine, the machine ID may be a meter ID that can be mapped to or associated with a machine). Other information may also be included in a tuple, for example.

According to an example implementation, energy consumption data for production processes are collected by energy meters and provided to a computer 150. The energy consumption data may be provided as a plurality of tuples or data sets, and then stored in a database of computer 150. The computer 150 may map or assign each of the tuples (or each of the energy consumption values) to one of the products. Once the energy consumption values have been assigned to products, the energy consumption values for each product may be aggregated, e.g., to determine energy consumption per product, such as determining a total energy consumed to produce a product, an average energy consumed per machine for each product, or other aggregation.

In this manner, various energy consumption data may be collected for production processes, and then may be used to improve energy efficiency for such production or manufacturing. For example, the energy consumption data per product may indicate that one machine in a production route for a product may be inefficient (e.g., consuming a relatively large amount of energy for a production step), and this machine may then be replaced with a different (e.g., more energy efficient) machine in order to improve overall energy efficiency for a production process of a product. Or the high-energy consuming production step may be modified or replaced with a different production step that may be more energy efficient.

As an additional or alternative example application, the energy consumption data for production processes or specific products may be reported to government agencies or consumers. The various implementations described herein may be used to identify production processes (or products) that are energy efficient (as produced). For example, the efficiency or amount of energy used to produce such products may then be identified to agencies or consumers, e.g., through a report or via a label attached to (or provided with) a product. These are just a few examples, and the various example implementations may be used for a variety of different purposes. Additional exemplary details and example implementations will now be described.

As shown in FIG. 1, the shop (or production) floor 110 may include a number of devices, such as machines, energy meters, one or more computers (such as computer 150). These devices may be provided in a distributed computing environment, e.g., in which at least some of these devices may communicate via asynchronous message passing. For example, a machine may be in communication with an energy meter. Also, each energy meter may be in communication with computer 150. For example, each energy meter may send messages to and receive messages from the computer 150.

In an example implementation, there may be a global clock, or a clock for one or more of the devices may be synchronized. In an example implementation, each energy meter may generate and send tuples to computer 150. Each tuple may include, for example, a machine ID, a start time stamp and end time stamp, and an energy consumption value. In one example implementation, each energy meter may generate and send a tuple to computer 150 when the energy consumed by a machine exceeds a threshold (e.g., where energy consumed above such threshold may typically indicate that the machine is not in standby or idle mode, but is performing a production step). Thus, in such example implementation, tuples may be generated and reported to computer 150 for production steps performed at each machine. Alternatively, tuples may be sent from the energy meters, even if energy consumption does not exceed such threshold, for example, where the computer 150 may discard any tuples if an energy consumption value is less than the threshold, e.g., less than .5 kWh (as an example), which may be considered standby power for one type of machine.

In one example implementation, a number of different rules or assumptions may be applied (one or more of these may be applied, in various example embodiments), such as: 1) Use of a global clock, or substantially synchronized clocks, e.g., between energy meters. In this manner time stamps from different energy meters are synchronized with respect to the same global clock or may have substantially synchronized clocks. 2) Message delivery is in order. Thus, if message m is sent by an energy meter before message m' (by the same or a different energy meter), then message m is received by computer 150 before message m'. 3) Products are completed in a product completion order. In one example, the final sequence of finished products (or product completion order) is the same as the sequence or order in which product orders arrive (or the order in which products are ordered, or the order in which an order for a product is entered into computer 150). 4) In one example embodiment, each product may be produced individually (e.g., batch production not used in such case). In other example embodiments, batch production may be used, and the techniques described herein may be applied to such batch or group of products or a plurality of products produced together (e.g., where a production step may be for production of a group, lot or batch of same type of products), and where an energy consumption value may be for a production step applied to a batch or to produce a plurality (or group) of products. Applying one or more assumptions or rules (such as those noted above as examples), may create one or more results, such as: the processes, products and machines are uniquely identifiable; and, there is a unique mapping between production processes and products.

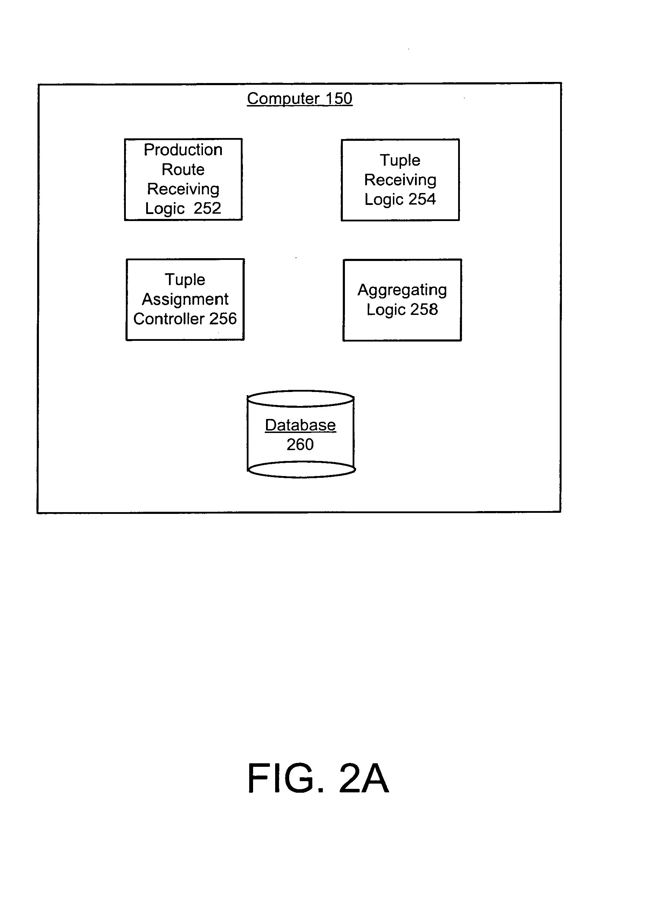

FIG. 2A is a block diagram illustrating an example implementation of computer 150 of FIG. 1. Computer 150 may include a production route receiving logic 252, a tuple receiving logic 254, a tuple assignment controller 256, an aggregating logic 258 and a database 260. Database 160 may store, for example, production routes 156, production completion order(s) 158, and/or energy consumption table 156. Production route receiving logic 252, tuple receiving logic 254, tuple assignment controller 256 and aggregating logic 258 may be implemented, for example, as hardware (e.g., programmable gate arrays or PGAs, or other hardware), software or code to be executed by processor 152, or a combination of hardware and software.

Production route receiving logic 252 may be configured to receive a production route associated with the production of one or more products using one or more machines, each of the machines to perform one or more production steps on one or more of the products. Tuple receiving logic 254 may be configured to receive a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products. Tuple assignment controller 258 may be configured to assign one or more of the tuples or one or more of the energy consumption values to one of the products based on the tuples and the production routes (and/or other information). Aggregating logic 258 may be configured to aggregate the energy consumption values assigned to one or more of the products.

In an example implementation, the tuple assignment controller 256 may be configured to identify a product completion order that identifies an order in which the production of the products is completed, order the received tuples into an ordered list of tuples based on machine, and then for each machine, based on time stamp information, and assign the tuples to one of the products such that, based on the time stamp information of the tuples, each machine performs a production step on one or more products in a same order as the product completion order.

In another example embodiment, the tuple assignment controller 256 may be configured to determine one or more expected transfer times between machines for one or more of the production routes, and assign one or more of the energy consumption values to one of the products based on the tuples, the production routes and the one or more expected transfer times.

In another example embodiment, the tuple assignment controller 256 may be configured to determine an expected production time for one or more of the production steps of one or more of the production routes, and assign one or more of the energy consumption values to one of the products based on the tuples, the production routes and the one or more expected production times.

In another example embodiment, the tuple assignment controller 256 may be configured to identify a product completion order that identifies an order in which the production of the products is completed, order the received tuples into an ordered list of tuples based on machine, and then for each machine, based on time stamp information, and assign the tuples to one of the products such that, based on the time stamp information of the tuples, each machine performs a production step on one or more products in a same order as the product completion order.

In another example embodiment, the tuple assignment controller 256 may be configured to assign a first tuple, associated with a first machine, within the ordered list to a first product wherein the first machine is on the production route for the first product, and assign a second tuple, associated with a second machine, within the ordered list to a second product wherein the first product is listed first on the product completion order and the second product is listed second on the production completion order.

In another example embodiment, the tuple assignment controller 256 may be configured to determine expected transfer times between successive machines for one or more of the production routes, and assign each of the tuples to one of the products based on the tuples, the production routes and one or more of the transfer times such that the expected transfer times between successive machines are most closely satisfied.

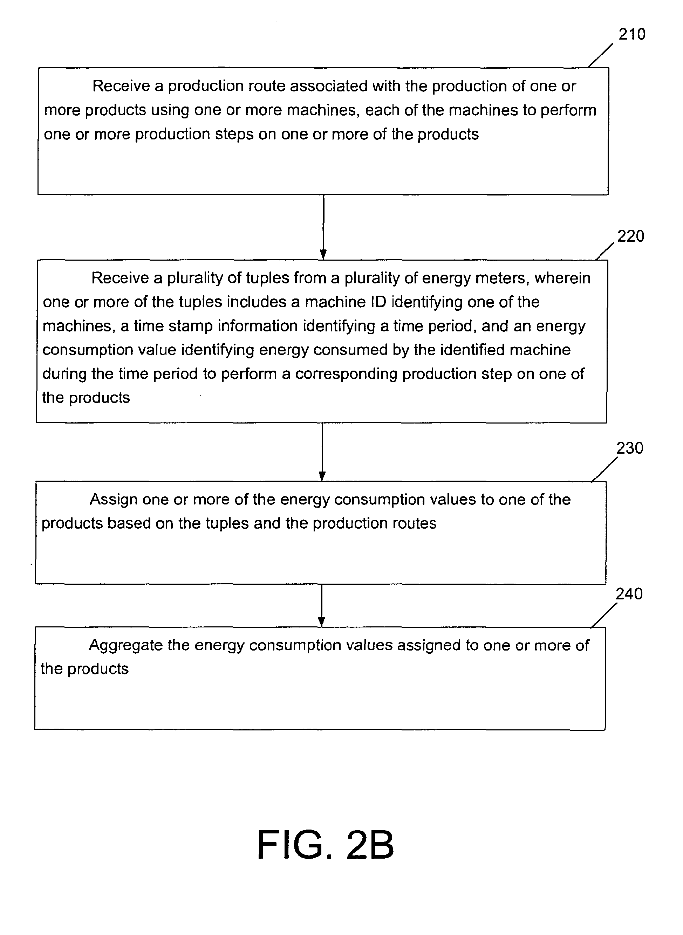

FIG 2B is a flow chart illustrating an operation of a computer to receive tuples (including energy consumption values) from machines and map the tuples to one or more products according to an example implementation.

A production route (such as production route(s) 156) is received (e.g., by production route receiving logic 252) that is associated with the production of one or more products using one or more machines (210). Each of the machines is configured to perform one or more production steps on one or more of the products.

A plurality of tuples are received (e.g., by tuple receiving logic 254) from a plurality of energy meters, wherein one or more of the received tuples includes a machine ID identifying one of the machines, a time stamp information identifying a time period, and an energy consumption value identifying energy consumed by the identified machine during the time period to perform a corresponding production step on one of the products (220).

One or more of the energy consumption values are assigned (e.g., by tuple assignment controller 256) to one of the products (e.g., products P1, P2, P3, ...) based on the tuples and the production routes (230). The assignment of tuples to products may be based on other or additional information. The energy consumption values assigned to one or more of the products are aggregated (240), e.g., by aggregating logic 258.

Aggregating the energy consumption values assigned to a product may include performing a computer-implemented mathematical function based on a plurality (or even all) of the energy consumption values assigned to a product (e.g., where such function may take into account an aggregate of the energy consumption values assigned to a product). Aggregation may include, for example, adding multiple (or even all of the) energy consumption values assigned to a product to determine a total energy consumption used by a machine (or machines) to produce the product (e.g., determining the total energy consumed by one or more of machines (M1, M2 and M5 to produce product P1, for example). Or, as another example, aggregation may include determining an average energy consumed per machine (e.g., total energy consumed to produce the product divided by the number of machines used). Aggregation may include performing various types of statistical analysis based on the energy consumption data or the tuples assigned to a product, such as determining a mean energy consumed per machine to produce a product, or determining a standard deviation for the energy consumed per machine to produce a product. Other types of aggregation may be performed.

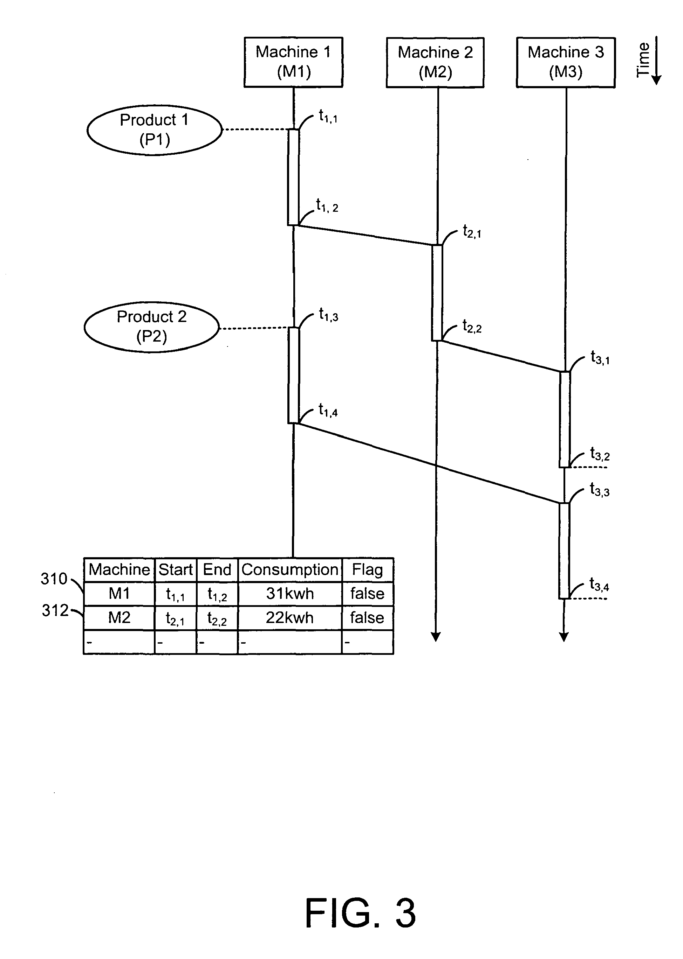

FIG. 3 is an event-timed diagram that illustrates the production route and timing of two different products: product 1 or P1, and product 2 or P2. The following table (Table 1) illustrates some example notations that are used.

Table 1

| Product | Route | Time stamps |
|---------|-------|-------------|
| P1 | [M1, M2, M3] | $t_{1.1}$ , $t_{1.2}$ , $t_{2.1}$ , $t_{2.2}$ , $t_{3.1}$ , $t_{3.2}$ , |
| P2 | [M1, M3] | $t_{1.3}$, $t_{1.4}$, $t_{3.3}$, $t_{3.4}$ |

The following notation may be used in a number of examples:

$P_i$ = Instance of a product number i.
$M_i$ = Instance of a machine number i.
$t_{ij}$ = the jth time stamp instance at machine i
[Mi, Mj] = The predetermined production route of a product as it travels from machine i to machine j.

As shown in Table 1 and FIG. 3, a production route and a group of time stamps are shown for each of products P1 and P2. Product P1 may have a production route of [M1, M2, M3], meaning that production route for P1 includes three machines, in the sequence or order of: M1, M2, M3. Thus, the production route (or production process) to produce P1 includes machine M1 performing a first production step, then machine M2 performing a second production step, and then machine M3 performing a third production step. Product P2 may have a production route of two machines, including [M1, M3]. As shown in FIG. 3, the production of P1 involved three different machines: machine 1 (M1) between time stamps [$t_{1.1}$, $t_{1.2}$], machine 2 (M2) between time stamps [$t_{2.1}$, $t_{2.2}$], machine 3 (M3) between time stamps [$t_{3.1}$, $t_{3.2}$]. Similarly, the production of P2 involved two different machines: machine 1 (M1) between time stamps [$t_{1.3}$, $t_{1.4}$], machine 3 (M3) between time stamps [$t_{3.3}$, $t_{3.4}$].

According to an example embodiment, to assist in mapping tuples to a product (at least in some cases), computer 150 may determine an initial (or expected) production time (or amount of time required) for a production step for each product (or each production route). Also, computer 150 may determine an initial (or expected) transfer time between successive production steps for each production route or product. The expected transfer time may refer to an amount of time required (or typically required) to transfer a product from machine A to machine B as part of a production route (or production process). The expected transfer time may be measured (for transfer from machine A to machine B), for example, as the time difference between a start time stamp for machine B and the end time stamp for machine A, for a product being transferred from machine A to machine B.

Expected (or initial) production times and transfer times may be determined by, for example, as the historical production times and transfer times for each production process. Alternatively, expected production times and transfer times may be determined by executing each production process separately (e.g., not in parallel with other production processes) using the specified machines, and then (computer 150) measuring the production times (or amount of time for each production step), and the transfer times between production steps based on tuples received from energy meters. In one example embodiment, each production process (each including multiple production steps) may be executed one or more times (to produce the specified product), and an average production time for each production step may be calculated, and an average transfer time between each production step may be calculated and used as the expected transfer times and production times.

The expected production times and transfer times for each production process / product may be stored in memory 154. Expected production times and transfer times may be determined at the beginning of an execution of a production run for a product (e.g., to produce multiple instances of the product), in the middle of a production run, or at the end of a production run, and the values for the initial or expected production times and/or transfer times may be updated, or recalculated. For example, if a machine is changed or a production process is changed, then the initial (expected) production times and transfer times may be re-calculated or updated, for example.

By determining the expected or initial production times and transfer times for a production route, this information may be used, at least in some cases, by computer 150 to assist in mapping or assigning tuples to a product. For example, a tuple may be mapped to a product where the transfer time between a machine of a current tuple e.g., as indicated by the time stamps, meets or exceeds (or alternatively, most closely matches) an initial or expected transfer time for that production step or machine of the production process. Similarly, a tuple may be mapped to a product where the production time, as indicated by the start and stop time stamps of the tuple, most closely matches (e.g., as compared to other tuples form the same machine), or alternatively, substantially matches (e.g., within a certain tolerance, such as 90%) the initial or expected production time for such production step of the process. The expected production times and transfer times may be used to map tuples to products in some embodiments, but are not required.

The duration of a single production step equals the time difference between a time stamp of a start time (or start time stamp) of the production step and a time stamp of the end time (or end time stamp) of the production step. Therefore, the duration of the first production step for P1 may be described by the following equation:

Production step duration = $t_{1.2} - t_{1.1}$, where $t_{1.1}$ is a start time stamp of the first production step for product P1, and $t_{1.2}$ is the end time stamp of the first production step for product P1 at machine M1.

Similarly, the duration of the production process (including all three production steps, and the transfer times between production steps) for product P1 may be described as:

Production duration (P1) = $t_{3.2} - t_{1.1.}$, where $t_{3.2}$ is the end time stamp of the third (last) production step for product P1 (identifying the time of the end of the production for product P1).

The transfer time is the amount of time to transfer a product from one machine to another machine. As shown by the following equation, the transfer time may be calculated as the difference between the end time of one production step and the beginning of the next. Therefore, the transfer time of P1 from machine 1 (M1) to machine 2 (M2) may be calculated as:

$$\text{Transfer time (P1, M1, M2)} = t_{2.1} - t_{1.2}$$

Each machine, or alternatively, an energy meter provided for a machine, may collect time stamp and energy consumption information (energy consumption values) for one or more production steps. In one example embodiment, an energy meter may collect the value of energy consumption according to start time and end time of a single production step (e.g., energy consumed by the machine between the start and end time stamps). The energy consumed by Machine Mi during a production step may include a sum of all energies consumed by the machine during the production step duration, which may be represented by the following equation:

$$Energy(Mi) = \sum_{j=1}^{n} Energy([t_{i,j}]) \forall j \text{ that contribute to } Production Duration$$

In an example implementation, a tuple is created (e.g., by an energy meter), which may include data related to energy consumption. In an example implementation, a tuple may be created per production step and machine, and the tuple may identify the machine, a start time stamp identifying a start of the production step, an end time stamp indicating an end of the production step, an energy consumption value identifying the amount of energy consumed by the identified machine during the production step, and a flag indicating whether the tuple has been assigned to a product (and/or identifying the product to which the tuple is assigned). Therefore, a tuple may be represented by the following equation:

$$tuple = <Mi, t_{start\ of\ production\ step}, t_{end\ of\ production\ step}, Energy(Mi), Flag>$$

In one example implementation, the flag has an initial state of false, indicating that the message was not mapped to a product yet. The flag may be set to true after the tuple has been mapped (or assigned) to a product to indicate that the tuple is not available for further assignment. Alternatively, after assignment, the flag may be set to identify the product, e.g., P1 or P2, to which the tuple has been mapped. The tuple for each production step may be sent from an energy meter to the computer 150 and may be stored in a database, e.g., within memory 154.

Referring to the example embodiment of FIG. 3, two example tuples are shown, including tuple 310 and tuple 312. Tuple 310 identifies machine M1, and an energy consumption value of 31 kWh, whereas tuple 312 identified machine M2 and an energy consumption value of 22kWh. These are some example tuples.

After computer 150 has received one or more tuples, computer 150 may then map one or more tuples (e.g., each tuple) to a product. In an example embodiment, computer 150 may map or assign each tuple to a machine, e.g., based on information, such as one or more of the production routes, time stamps, a product completion order (or processing order), the expected (or initial) production times, and/or the expected (or initial) transfer times, or other information. Therefore, it may be unnecessary to track each individual product, for example, since tuples (including energy consumption information) may be mapped or assigned to specific products. Several examples of mapping tuples to products will now be described. These illustrative mapping examples may include: 1) serial and sequential production; 2) serial and non-sequential production.

**Serial and Sequential Production Example**

FIG 3 is an event-timed diagram that illustrates the production route and timing of two different products for an example serial and sequential production. Serial refers to one production step being performed on a product at a time (e.g., multiple machines do not perform different production steps on a product in parallel or at the same time for serial production). Thus, the production process assumes serial processing, at least in this example.

Sequential production includes production scenarios in which the production routes for a group of different products follow the same sequence of machine order. Two example cases are considered: In a sequential, simple order, a group of products have the same production route, and may follow, for example, the sequence [M1, M2, M3]. In a sequential, dissimilar simple order, different products may have different production routes, but are characterized by similar sequences. For example, all (or a group of) the products may use the same overall sequence of machines, although one or more machines/production steps may be omitted or skipped from the overall sequence in some cases. For example, the overall sequence may be [M1, M2, M3]. Product P1 may use the sequence [M1, M2, M3]. Product P2 may use the production route or sequence [M1, M2]. Product P3 may use the production route or sequence [M1, M3]. Thus, for P2, machine M3 has been omitted from the overall sequence. And, for P3, machine M2 has been omitted from the overall sequence.

In the example serial and sequential production, a product completion order may be provided, such as P1, P2. In an example implementation, the product completion order may specify the order in which products are completed. Product completion order may also specify the order in which products are processed at each machine. For example, if a product completion order is P1, P2, then machine 1 will process P1 first, then P2. Therefore, at least in some cases, a product completion order (or a product processing order) may be used to assist computer 150 in mapping tuples to products.

FIG. 3 illustrates an event-timed diagram for the sequential, dissimilar simple order in which the overall sequence of machines is [M1, M2, M3]. Product P1 uses the production route or sequence [M1, M2, M3], and product P2 use the production route or sequence [M1, M3]. In this example implementation, the product completion order is P1, P2.

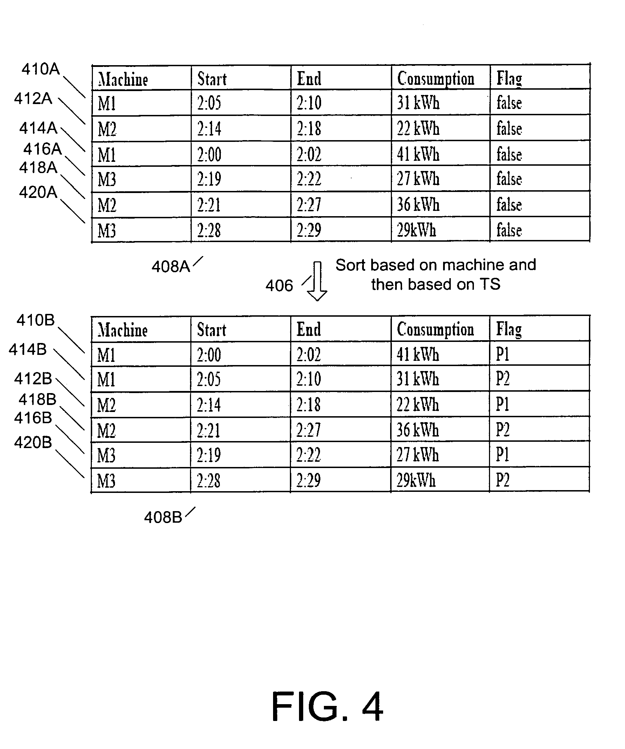

FIG 4 is a diagram illustrating a mapping of tuples corresponding to the event-timed diagram of FIG. 3. Six tuples, associated with the events or production steps shown in FIG. 3, are received by computer 150 from different energy meters or machines. The original (unsorted) database or list of tuples is shown as table 408A, and a sorted table is shown as sorted table 408B. In this example of a serial sequential product, each machine processes the products in the product completion order, e.g., P1, P2. Therefore, machine M1 processes product P1, then product P2. Similarly, M2 and M3 each process product P1 and then product P2, according to this example.

In this example, the tuples (or data entries of the database) of table 408A may be sorted (406) to produce a sorted table 408B. The tuples of table 408A are first sorted by machine, for example, according to the overall sequence of machines, e.g., [M1, M2, M3]. Then, within (or for) each machine, the tuples are sorted in ascending order (e.g., oldest to most recent in time) based on the time stamps (e.g., start time stamps), to provide sorted table 408B. Thus, in this example, the two M1 tuples 410A and 414A become the first two tuples 410B and 414B of the sorted table 408B. The two M2 tuples 412A and 418A become the third and fourth tuples 412B and 418B in sorted table 408B. And, the two M3 tuples 416A and 420A become the fifth and sixth tuples 416B and 420B in the sorted table 408B.

Next, the sorted tuples are assigned or mapped to a product (either product P1 or product P2 in this example), e.g., based on the product completion order, the production route for each product, the time stamps, and/or other information. In this example, the sorting (406) of the table 408A to provide sorted table 408B may be based upon the time stamps and the overall sequence [M1, M2, M3] used by the production routes for both P1 and P2 (although one or more machines may be omitted from this overall sequence). Therefore, the sorting or ordering of the tuples (as shown in FIG 4) may assist with the mapping of tuples to products.

In an example implementation, after the sorting 406 has been performed, the mapping of tuples may be performed based on product completion order, which indicates that each machine processes the products in the order P1, P2. In this example, the first tuple (410B) for machine M1 is mapped to product P1, and the second tuple (414B) for machine M1 is mapped to product P2 (because the product completion order or processing order is P1, P2, which indicates that machine M1 processes P2 after P1). Similarly, tuples for the other machines are mapped to products based on time stamps (e.g., start time stamp) and product completion order. Thus, tuples 412B and 418B for machine M2 are mapped to P1 and P2, respectively. Tuples 416B and 420B for machine M3 are mapped to products P1 and P2, respectively. In this example implementation, the flag indicates to which product the tuple has been mapped. Therefore, the mapping of tuples to products is deterministic or unambiguous.

After mapping or assigning tuples to a product, computer 150 may then aggregate the energy consumption values for each product, or perform other analysis for each product, for example.

**Serial and Non-Sequential Production Examples**

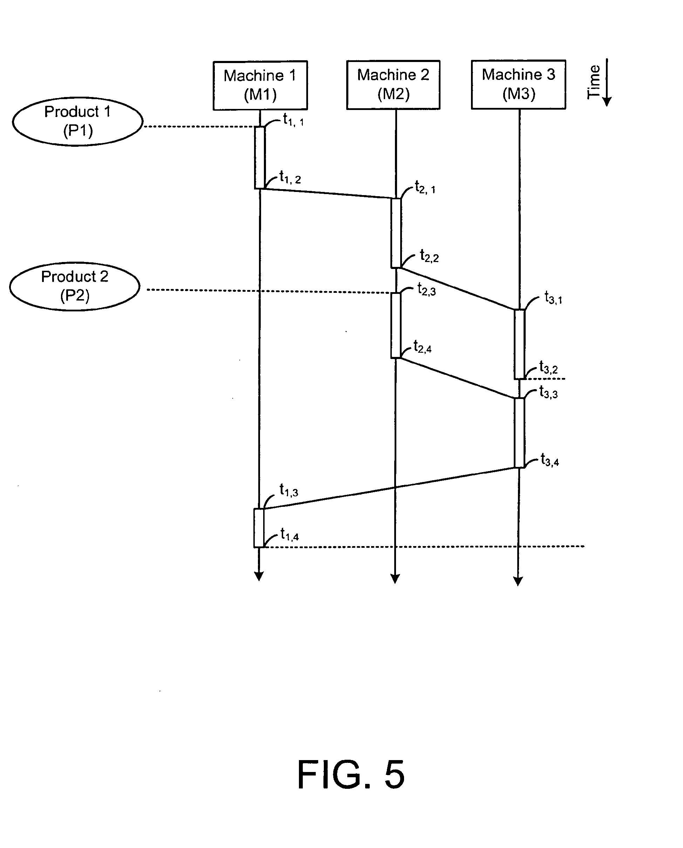

FIG 5 is an event-timed diagram that illustrates the production route and timing of two different products for an example serial and non-sequential production. In the example of non-sequential production, different products have different production routes, or production routes with different machine orders. For example, in the example shown in FIG. 5, product 1 (or product P1) has a production route of machine 1 (or M1), machine 2 (or M2), machine 3 (M3), or [M1, M2, M3]. Product 2 (or P2) has a production route of [M2, M3, M1] in this example. A product completion order of product 1, product 2 (or P1, P2) is used in this example. In this example implementation, although the products P1, P2 have different production routes, each machine processes each product in the product completion order (which may also be referred to as processing order). Thus, in this example, machine M1 processes product P1 at a production step between time stamps $t_{1.1}$ and $t_{1.2}$, and later processes product P2 at a production step between time stamps $t_{1.3}$ and $t_{1.4}$, as shown in FIG. 5. Also, machine M2 processes product P1 at a production step between time stamps $t_{2.1}$ and $t_{2.2}$, and later processes product P2 at a production step between time stamps $t_{2.3}$ and $t_{2.4}$. Similarly, machine M3 processes product P1 at a production step between time stamps $t_{3.1}$ and $t_{3.2}$, and later processes product P2 at a production step between time stamps $t_{3.3}$ and $t_{3.4}$.

Energy meters may collect energy consumption information and time stamp information for each of the production steps shown in FIG. 5, and forward tuples for each production step to computer 150. Computer 150 may, for example, sort the tuples based on machine, and then based on time stamp order. Each tuple may then be assigned or mapped to one of products P1 or P2 based on the production completion order (P1, P2), and time stamps, in the same or similar manner as performed for diagram of FIG. 3.

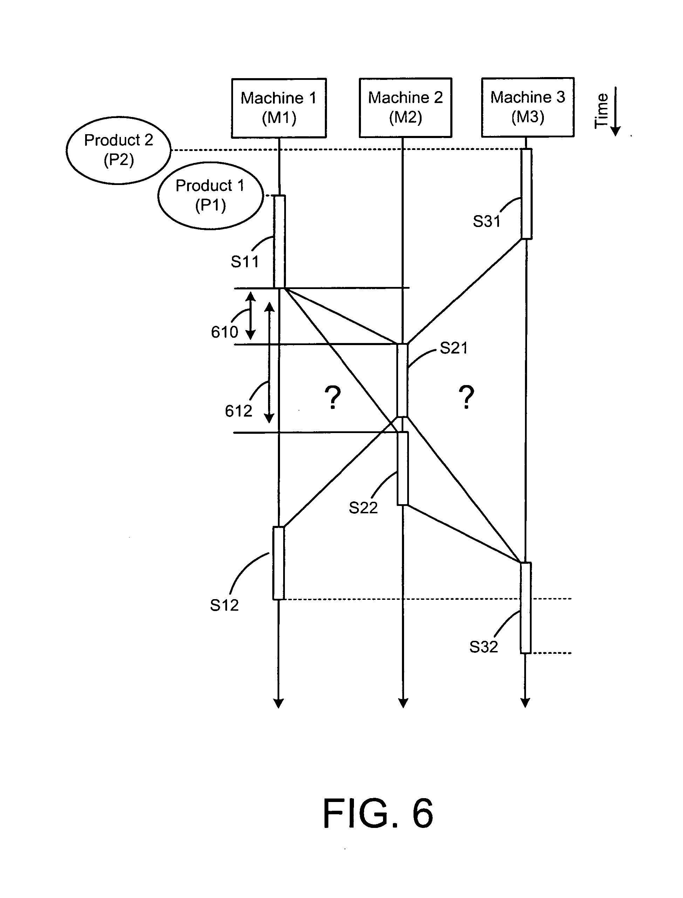

FIG. 6 is an event-timed diagram that illustrates the production route and timing of two different products for another example serial and non-sequential production. In this example, product 1 has a production route of [M1, M2, M3], and product 2 has a production route of [M3, M2, M1]. Thus, products 1 and 2 have different product routes. Also in this example, the products are not necessarily processed at each machine in a particular product completion order. Rather, in this example, products may be processed at each machine in a different order, depending on the timing and the production routes, etc. In this example, the production of products P1 and P2 overlap in time or are performed in parallel. Based on the production routes for P1 and P2, it is known that production of P1 begins at M1, proceeds to M2, then finishes at M3, and that production of P2 begins at M3, proceeds to M2, and then finishes production at M1. Thus, both products P1 and P2 are processed at M2 as a second production step.

Also, as shown in FIG. 6, six production steps are shown, with two production steps for each machine. The production steps include production steps S11 and S12 for machine M1, production steps S21 and S22 for machine M2, and production steps S31 and S32 at machine M3. A tuple may be received by computer 150 for each of these production steps. In this example, the tuples are not assigned based on a completion order. Rather, the tuples (or associated production steps) may be mapped or assigned to a product based on other information.

For example, based on the production routes for P1 and P2 and the overlapping production processes for P1 and P2, production step S11 (for machine M1) is the first M1 production step, and is mapped to product P1 since P1 is first processed by M1 (according to the production route for P1). Similarly, production step S31 (for machine M3) is mapped to product 2 since product 2 is first processed by machine 3 (according to the production route for P2). However, in this example, based only on the production routes and the time stamps, it may not be possible to map or assign the production steps S21 and S22 associated with machine 2 to a product, since both of these production steps occur between the first and third production steps for both productions P1 and P2.

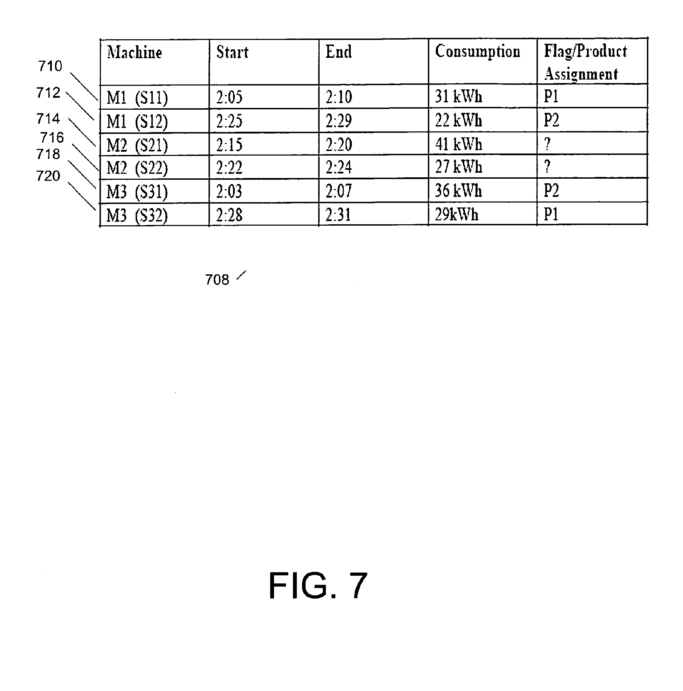

FIG 7 is a table 708 of example tuples associated with the diagram shown in FIG. 6. Table 708 includes the six tuples received by computer 150 that are associated with the diagram of FIG. 6. Tuples 710, 712, 714, 716, 718 and 720 correspond to production steps S11, S12, S21, S22, S31 and S32, respectively. The assignments of tuples 710 and 720 to P1 and 712 and 718 to P2 are reflected by the flag column in table 708.

However, in this example, it may not be possible to unambiguously assign tuple 714 (corresponding to production step S21) and tuple 716 (corresponding to production step S22) to a product based only on the production routes and time stamp information. Therefore, according to an example embodiment, additional information may be considered by computer 150 in order to assign or map tuples 714 and 716 to a product.

According to an example embodiment, the initial or expected production times and/or transfer times may be used in order to map one or more tuples to a product. For example, for product 1 (P1), an expected transfer time may be 11 minutes from end of production step S11 (at machine M1) to the start of the second production step at machine M2. According to an example embodiment, the time (610) between the end of production step S11 (end time stamp of 2:10) and the start of production step S21 for tuple 714 (with start time stamp of 2:15) is 5 minutes (2:15 - 2:10). The time (612) between the end of production step S11 and the start of production step S22 for tuple 716 is 12 minutes (2:22 - 2:10). Therefore, according to one example implementation, tuple 714 may be eliminated from product P1 since the transfer time from M1 to M2 is not met or satisfied by tuple 714, but is met (and exceeded by 1 minute) by tuple 716. In other words, in this example, tuple 714 cannot be mapped or assigned to P1 since time 610 (only 5 minutes) does not meet (or does not most closely match) the expected transfer time (e.g., 9 minutes) from M1 to M2 for P1. Therefore, tuple 716 (S22) is assigned to P1 and tuple 714 (S21) is assigned to P2. This is only one example, and many other examples may be used.

As another example, tuples 714 and 716 may be mapped or assigned to a product based on which tuple 714 or 716 has a production time that meets (or exceeds) or most closely matches an expected production time(s) for machine M2 of the respective product(s). For example, if the expected production time, with respect to machine M1, for product P1 is 5 minutes, and the expected production time for P2 is 2 minutes, then tuple 716 (S22) may be mapped or assigned to P1 and tuple 714 (S21) may be mapped or assigned to P2, since the duration of S21 is 5 minutes, and the duration of S22 is 2 minutes, which meets the expected production times for both products with respect to machine M2. Alternatively, tuples may be mapped to a product in a manner such that the production times and/or transfer times are most closely met or matched.

**Claims**

1. A computer program product, the computer program product being tangibly embodied on a computer-readable storage medium and including executable code that, when executed, is configured to cause at least one data processing apparatus to:

   receive a production route associated with the production of one or more products using one or more machines, each of the machines to perform one or more production steps on one or more of the products;
   receive a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products;
   assign one or more of the energy consumption values to one of the products based on the tuples and the production routes; and
   aggregate the energy consumption values assigned to one or more of the products.

2. The computer program product of claim 1 wherein the time stamp information comprises a start time stamp identifying a start of a time period and an end time stamp identifying an end of the time period.

3. The computer program product of claim 1 or 2, wherein the code being configured to cause at least one data processing apparatus to assign comprises code being configured to cause at least one data processing apparatus to:

   identify a product completion order that identifies an order in which the production of the products is completed;
   order the received tuples into an ordered list of tuples based on machine, and then for each machine, based on time stamp information,
assign the tuples to one of the products such that, based on the time stamp information of the tuples, each machine performs a production step on one or more products in a same order as the product completion order.

4. The computer program product of claim 3, wherein the code being configured to cause at least one data processing apparatus to assign comprises code being configured to cause at least one data processing apparatus to:

assign a first tuple, associated with a first machine, within the ordered list to a first product wherein the first machine is on the production route for the first product; and
assign a second tuple, associated with a second machine, within the ordered list to a second product wherein the first product is listed first on the product completion order and the second product is listed second on the production completion order.

5. The computer program product of any one of the preceding claims, wherein the machine ID is selected from the group consisting of:

a machine ID that identifies a specific machine; and
a machine ID that identifies a type of machine.

6. The computer program product of any one of the preceding claims, wherein the code is further configured to cause the at least one data processing apparatus to:

determine expected transfer times between successive machines for one or more of the production routes; and

wherein the code being configured to cause at least one data processing apparatus to assign comprises the code being configured to cause the at least one data processing apparatus to assign each of the tuples to one of the products based on the tuples, the production routes and one or more of the transfer times such that the expected transfer times between successive machines are most closely satisfied.

7. The computer program product of any one of the preceding claims, wherein the tuples are received from energy meters associated with each machine, and further wherein the time stamp information included in each of the tuples is based on either a global clock or on clocks at each of the energy meters that are synchronized with a clock at the at least one data processing apparatus.

8. The computer program product of any one of the preceding claims, wherein the code being configured to cause the at least one data processing apparatus to aggregate comprises the code being configured to cause the at least one data processing apparatus to perform a mathematical calculation based on a plurality of the energy consumption values assigned to a product.

9. The computer program product of any one of the preceding claims, wherein the code being configured to cause the at least one data processing apparatus to aggregate comprises the code being configured to cause the at least one data processing apparatus to perform at least one of the following:

determine a total energy consumption for the production of one or more of the products; or
determine an average energy consumption per machine for the production of one or more of the products.

10. The computer program product of any one of the preceding claims, wherein the code being configured to cause at least one data processing apparatus to assign comprises code being configured to cause at least one data processing apparatus to:

determine one or more expected transfer times between machines for one or more of the production routes; and
assign one or more of the energy consumption values to one of the products based on the tuples, the production routes and the one or more expected transfer times.

11. A computer implemented method comprising:

receiving a production route associated with the production of one or more products using one or more machines, each of the machines to perform one or more production steps on one or more of the products;

receiving a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products;

assigning one or more of the energy consumption values to one of the products based on the tuples and the production routes; and

aggregating the energy consumption values assigned to one or more of the products.

12. The method of claim 11 wherein the time stamp information comprises a start time stamp identifying a start of a time period and an end time stamp identifying an end of the time period.

13. The method of claim 11 or 12, wherein the assigning comprises:

identifying a product completion order that identifies an order in which the production of the products is completed;

ordering the received tuples into an ordered list of tuples based on machine, and then for each machine, based on time stamp information; and

assigning the tuples to one of the products such that, based on the time stamp information of the tuples, each machine performs a production step on one or more products in a same order as the product completion order.

14. The method of any one of claims 11 to 13 wherein the tuples are received from energy meters associated with each machine, and further wherein the time stamp information included in each of the tuples is based on either a global clock or on clocks at each of the energy meters that are synchronized with a clock at the at least one data processing apparatus.

15. The method of any one of claims 11 to 14 wherein the assigning comprises:

determining one or more expected transfer times between machines for one or more of the production routes; and assigning one or more of the energy consumption values to one of the products based on the tuples, the production routes and the one or more expected transfer times; and wherein the assigning optionally further comprises:

determining an expected production time for one or more of the production steps of one or more of the production routes; and

assigning one or more of the energy consumption values to one of the products based on the tuples, the production routes and the one or more expected production times.

16. An apparatus comprising:

a production route receiving logic configured to receive a production route associated with the production of one or more products using one or more machines, each of the machines to perform one or more production steps on one or more of the products;

a tuple receiving logic configured to receive a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products;

a tuple assignment controller configured to assign one or more of the energy consumption values to one of the products based on the tuples and the production routes; and

an aggregating logic configured to aggregate the energy consumption values assigned to one or more of the products.

17. The apparatus of claim 16 wherein the tuple assignment controller is configured to:

identify a product completion order that identifies an order in which the production of the products is completed;

order the received tuples into an ordered list of tuples based on machine, and then for each machine, based on time stamp information; and

assign the tuples to one of the products such that, based on the time stamp information of the tuples, each machine performs a production step on one or more products in a same order as the product completion order.

18. The apparatus of claim 16 or 17, wherein the tuple assignment controller is configured to:

determine one or more expected transfer times between machines for one or more of the production routes; and assign one or more of the energy consumption values to one of the products based on the tuples, the production routes and the one or more expected transfer times; and wherein the tuple assignment controller is optionally further configured to:

determine an expected production time for one or more of the production steps of one or more of the production routes ; and
assign one or more of the energy consumption values to one of the products based on the tuples, the production routes and the one or more expected production times.

120
Energy
Meter

124
Energy
Meter

122A

126
Energy
Meter

128
Energy
Meter

P2

M1

M2

M4

122B

M6

M7

121A

121B

130
Energy
Meter

M3

132
Energy
Meter

121D

P1

122C

122D

M5

Energy
Meter

121C

134

110 Shop (or Production) Floor

Network

140

**Computer 150**

Processor
152

Memory
154

**Production Routes**

P1  (M1, M2, M5)
P2  (M4, M6, M7)

.

.

.

156

158

**Energy Consumption Table**

| Machine | Start | End | Consumption | Assigned? |
|---------|-------|-----|-------------|-----------|
| M1 | t1 | t2 | 41kWh | No |
| M2 | t3 | t4 | 22kWh | No |

.

.

.

**Product Completion Order**

P2
P1
P3

.

.

.

160

# FIG. 1

Computer 150

Production
Route
Receiving
Logic 252

Tuple
Receiving
Logic 254

Tuple
Assignment
Controller 256

Aggregating
Logic 258

Database
260

# FIG. 2A

210

Receive a production route associated with the production of one or more products using one or more machines, each of the machines to perform one or more production steps on one or more of the products

220

Receive a plurality of tuples from a plurality of energy meters, wherein one or more of the tuples includes a machine ID identifying one of the machines, a time stamp information identifying a time period, and an energy consumption value identifying energy consumed by the identified machine during the time period to perform a corresponding production step on one of the products

230

Assign one or more of the energy consumption values to one of the products based on the tuples and the production routes

240

Aggregate the energy consumption values assigned to one or more of the products

# FIG. 2B

| | Machine | Start | End | Consumption | Flag |
|---|---|---|---|---|---|
| 310 | M1 | $t_{1,1}$ | $t_{1,2}$ | 31kwh | false |
| 312 | M2 | $t_{2,1}$ | $t_{2,2}$ | 22kwh | false |
| | - | - | - | - | - |

# FIG. 3

410A

412A

414A

416A

418A

420A

| Machine | Start | End | Consumption | Flag |
|---------|-------|------|-------------|-------|
| M1 | 2:05 | 2:10 | 31 kWh | false |
| M2 | 2:14 | 2:18 | 22 kWh | false |
| M1 | 2:00 | 2:02 | 41 kWh | false |
| M3 | 2:19 | 2:22 | 27 kWh | false |
| M2 | 2:21 | 2:27 | 36 kWh | false |
| M3 | 2:28 | 2:29 | 29kWh | false |

408A

406  Sort based on machine and then based on TS

410B

414B

412B

418B

416B

420B

| Machine | Start | End | Consumption | Flag |
|---------|-------|------|-------------|-------|
| M1 | 2:00 | 2:02 | 41 kWh | P1 |
| M1 | 2:05 | 2:10 | 31 kWh | P2 |
| M2 | 2:14 | 2:18 | 22 kWh | P1 |
| M2 | 2:21 | 2:27 | 36 kWh | P2 |
| M3 | 2:19 | 2:22 | 27 kWh | P1 |
| M3 | 2:28 | 2:29 | 29kWh | P2 |

408B

# FIG. 4

FIG. 5

FIG. 6

| Machine | Start | End | Consumption | Flag/Product Assignment |
|---|---|---|---|---|
| M1 (S11) | 2:05 | 2:10 | 31 kWh | P1 |
| M1 (S12) | 2:25 | 2:29 | 22 kWh | P2 |
| M2 (S21) | 2:15 | 2:20 | 41 kWh | ? |
| M2 (S22) | 2:22 | 2:24 | 27 kWh | ? |
| M3 (S31) | 2:03 | 2:07 | 36 kWh | P2 |
| M3 (S32) | 2:28 | 2:31 | 29kWh | P1 |

708

# FIG. 7

Europäisches
Patentamt
European
Patent Office
Office européen
des brevets

## EUROPEAN SEARCH REPORT

**Application Number**

EP 11 00 9930

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2010 202 088 A1 (SCHNEIDER ELECTRIC AUSTRALIA PTY LTD) 9 December 2010 (2010-12-09) * the whole document * | 1-18 | INV. G06Q50/06 G06Q10/06 |
| X | US 2010/286841 A1 (SUBBLOIE ALBERT [US]) 11 November 2010 (2010-11-11) * the whole document * | 1-18 | |
| X | WO 2005/004020 A1 (ABB RESEARCH LTD [CH]; WIIK JAN [NO]; JELLUM EDGAR [NO]; HAUGEN TROND) 13 January 2005 (2005-01-13) * the whole document * | 1-18 | |

**TECHNICAL FIELDS SEARCHED (IPC)**

G06Q

The present search report has been drawn up for all claims

| Place of search | Date of completion of the search | Examiner |
|---|---|---|
| Munich | 10 May 2012 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 9930

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2012

| Patent document cited in search report | | Publication date | Patent family member(s) | | Publication date |
|---|---|---|---|---|---|
| AU 2010202088 | A1 | 09-12-2010 | NONE | | |
| US 2010286841 | A1 | 11-11-2010 | EP | 2402904 A2 | 04-01-2012 |
| | | | US | 2010286841 A1 | 11-11-2010 |
| WO 2005004020 | A1 | 13-01-2005 | AU | 2003265082 A1 | 21-01-2005 |
| | | | WO | 2005004020 A1 | 13-01-2005 |

EPO FORM P0459

For more details about this annex : see Official Journal of the European Patent Office, No. 12/82